**Europäisches Patentamt**

**European Patent Office**

**Office européen des brevets**

(11) Numéro de publication : **0 453 328 B1**

(12) # FASCICULE DE BREVET EUROPEEN

(45) Date de publication du fascicule du brevet :
05.04.95 Bulletin 95/14

(51) Int. Cl.⁶ : **H02K 57/00**

(21) Numéro de dépôt : **91400444.5**

(22) Date de dépôt : **19.02.91**

(54) **Moteur électrique à courant continu à deux axes de rotation, notamment pour viseur.**

(30) Priorité : **22.02.90 FR 9002200**

(43) Date de publication de la demande :
**23.10.91 Bulletin 91/43**

(45) Mention de la délivrance du brevet :
**05.04.95 Bulletin 95/14**

(84) Etats contractants désignés :
**AT BE CH DE DK ES FR GB GR IT LI LU NL SE**

(56) Documents cités :
**EP-A- 0 113 267
FR-A- 2 452 193
PATENT ABSTRACTS OF JAPAN, vol. 13, no. 195 (E-754)(3543), 10 mai 1989 ; & JP-A-0116 253**

(73) Titulaire : **SOCIETE D'APPLICATIONS GENERALES D'ELECTRICITE ET DE MECANIQUE SAGEM
6, Avenue d'Iéna
F-75783 Paris Cédex 16 (FR)**

(72) Inventeur : **Guillemaille, Olivier
15 Rue de l'Aven
F-95800 Cergy-St-Christophe (FR)**
Inventeur : **Ruas, Olivier
44 rue Victor Hugo
F-78210 Saint-Cyr-l'Ecole (FR)**
Inventeur : **Courrier, François
10 Rue des Mésanges
F-95610 Eragny/Oise (FR)**
Inventeur : **Gilbert, Henri
12 Impasse du Clos Thiron
F-28630 Morancez Chartres Cédex (FR)**

(74) Mandataire : **Gorree, Jean-Michel et al
Cabinet Plasseraud
84, rue d'Amsterdam
F-75009 Paris (FR)**

# Description

La présente invention concerne un agencement de moteur électrique à courant continu comportant un rotor à deux degrés de liberté, c'est-à-dire apte à tourner par rapport à deux axes de rotation, tel que défini dans le préambule de la revendication 1.

Un tel moteur électrique à deux axes de rotation peut être utilisé dans toute application où il est nécessaire de fournir un couple de précession à une droite directrice, avec un angle de débattement limité. C'est le cas notamment pour des viseurs (par exemple pointage d'un détecteur de rayonnements, autodirecteur pour des missiles, etc.).

On connaît déjà des dispositifs motorisés comportant un organe mobile (rotor) mobile en rotation par rapport à deux axes. Toutefois, ces dispositifs connus comportent des paires de bobinages distincts ou des paires d'ensembles de bobinages distincts qui sont nécessairement encombrants. Il peut par exemple s'agir de moteurs électriques individuels périphériques montés respectivement sur les deux cadres mutuellement mobiles d'un montage à cardan. Outre qu'ils sont encombrants, ces agencements connus sont également lourds.

L'invention a donc essentiellement pour objet de proposer une structure perfectionnée de moteur électrique qui permette d'écarter les inconvénients des solutions antérieures et de mieux donner satisfaction aux diverses exigences, en proposant un moteur électrique à rotor mobile en rotation par rapport à deux axes, qui est plus compact et moins lourd que les paires de moteurs utilisées jusqu'à présent.

A ces fins, un moteur électrique conforme à l'invention est caractérisé en ce que :
- l'aimant permanent du rotor est unique et à polarisation dirigée radialement,
- la pièce de retour de flux statorique (7) est unique et centrée sur la position de repos du rotor, et
- les bobinages croisés (8) du stator sont au nombre de deux formant une paire unique et sont enroulés en direction radiale autour de ladite pièce de retour de flux statorique (7).

Grâce à cette structure, le rotor est apte à être dévié d'une position de repos (ou position pointée), par rotation autour du centre de rotation selon l'un et/ou l'autre des degrés de liberté, en fonction des excitations électriques appliquées respectivement aux bobinages du stator.

Le rendement du moteur sera nettement amélioré par la présence d'une pièce de retour de flux rotorique associée à l'aimant du rotor, à l'opposé du stator.

Dans un exemple de réalisation préféré, le rotor comprend un bras supporté de manière à pouvoir tourner autour dudit centre de rotation, selon les deux degrés de liberté susindiqués, et supportant à une extrémité libre le susdit aimant permanent.

Pour certaines applications, les faces en regard du rotor et du stator pourront être en forme de calotte sphérique respectivement convexe et concave et seront sensiblement parallèles l'une à l'autre de manière à avoir un entrefer constant et minimum dans toute la plage de débattement du rotor.

Dans un premier exemple de réalisation possible, il est prévu des plages de débattement angulaire du rotor par rapport à chacun des deux axes de rotation et la pièce de retour de flux statorique possède alors un contour rectangulaire ou carré ; bien entendu les débattements angulaires peuvent être différents de part et d'autre de la position de repos, et ce pour chacun des axes de rotation. L'enveloppe des débattements du rotor est alors une pyramide, symétrique ou asymétrique.

Dans un second exemple de réalisation possible, il est prévu une plage de débattement angulaire du rotor par rapport au centre de rotation et la pièce de retour de flux statorique possède alors un contour circulaire (valeur maximale de dépointage) ; l'enveloppe de débattements du rotor est alors un cône.

Il est possible que le centre de rotation soit constitué par une articulation sphérique, ce qui laisse toute liberté quant à l'architecture de l'ensemble du moteur.

Dans le cas le plus courant où les deux degrés de liberté en rotation sont déterminés par rapport à deux axes orthogonaux, les deux bobinages du stator sont mutuellement perpendiculaires et le centre de rotation est déterminé par une articulation sphérique ou une articulation à cardan à deux axes orthogonaux.

Dans un mode de réalisation particulièrement intéressant, au moins un des bobinages est constitué sous forme de deux demi-bobinages indépendants s'étendant respectivement de part et d'autre de la position de repos et excitables de façon indépendante. Ainsi, par une commande appropriée de chaque demi-bobinage, il est possible d'accroître le couple moteur lorsque le rotor est en position dépointée, et en particulier fortement dépointée.

Le moteur électrique conforme à l'invention satisfait donc pleinement aux exigences recherchées par le fait que, tout en possédant un rotor apte à tourner par rapport à deux axes de rotation, le groupement des deux bobinages statoriques correspondants sur une même carcasse de stator permet de gagner en encombrement et en poids.

L'invention sera mieux comprise à la lecture de la description détaillée qui suit de certains modes de réalisation donnés uniquement à titre d'exemples non limitatifs. Dans cette description, on se réfère aux dessins annexés sur lesquels :
- la figure 1 est une vue très schématique, de côté, d'un moteur électrique conforme à l'invention ;
- les figures 2A et 2B sont des vues schématiques de face de deux réalisations possibles de la pièce de retour de flux statorique utilisable dans le moteur de la fig. 1 ;
- la figure 3 est une vue schématique de côté, en coupe, d'un exemple concret de réalisation du moteur de l'invention, incorporant la pièce de retour de flux statorique de la fig. 2A ;
- les figures 4 et 5 sont des schémas montrant le tracé des équiflux magnétiques du moteur de l'invention respectivement dans deux positions fonctionnelles différentes ;
- la figure 6 est une vue schématique d'une variante de réalisation du stator du moteur de la fig. 1 ;
- la figure 7 est un diagramme représentant la variation du facteur d'échelle du moteur de la fig. 6 en fonction de la valeur angulaire du dépointage du rotor ; et
- les figures 8A et 8B sont deux diagrammes illustrant le principe de la commande des demi-bobinages du moteur de la figure 6.

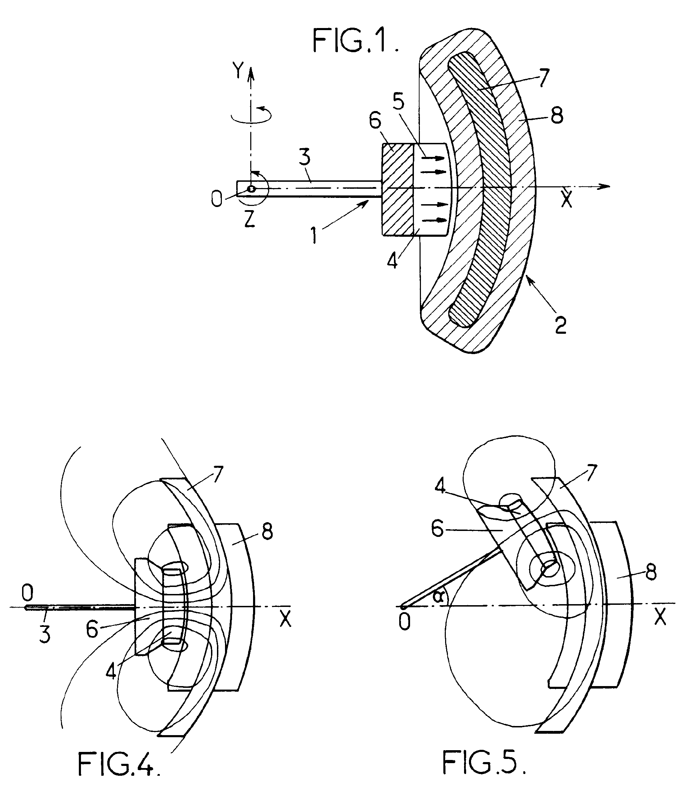

En se référant tout d'abord à la figure 1, un moteur électrique à courant continu conforme à l'invention comprend un rotor 1 et un stator 2.

Le rotor comporte un bras 3 mobile en rotation autour d'un point O avec deux degrés de liberté de rotation, respectivement autour des axes OY et OZ ; les trois axes OX (axe du bras 3 en position de repos - voir ci-après-), OY et OZ sont mutuellement perpendiculaires (OZ étant perpendiculaire au plan du dessin). A son extrémité libre, le bras 3 supporte un aimant permanent 4 (la direction d'aimantation étant indiquée par des flèches 5), en arrière duquel est prévue une pièce 6 de retour de flux rotorique (pièce canalisant le flux magnétique).

Le stator 2 comprend une armature rigide constituant une pièce de retour de flux statorique 7 qui est centrée sur l'axe OX et sur laquelle deux bobinages indépendants 8 sont enroulés en direction radiale et sont disposés en configuration croisée en correspondance avec la position mutuelle des axes OY et OZ (ici mutuellement perpendiculaires). Sur la fig. 1 seul apparaît l'un des bobinages 8 (l'autre bobinage est disposé, de la même manière, perpendiculairement au plan du dessin).

Des commandes ou excitations électriques séparées respectivement pour les deux bobinages permettent de provoquer la rotation du rotor autour du point O par rapport aux deux axes OY et OZ. On peut ainsi définir un angle de dépointage $\alpha$ qui est l'angle formé par l'axe du bras 3 avec l'axe OX de référence ; pour $\alpha = 0$ (axe du bras coïncidant avec l'axe OX, position représentée à la fig. 1), le rotor est dit "en position pointée".

Les rotations du rotor sont limitées à un débattement angulaire inférieur à 180° en principe, et en pratique n'excédant pas 60 à 70°.

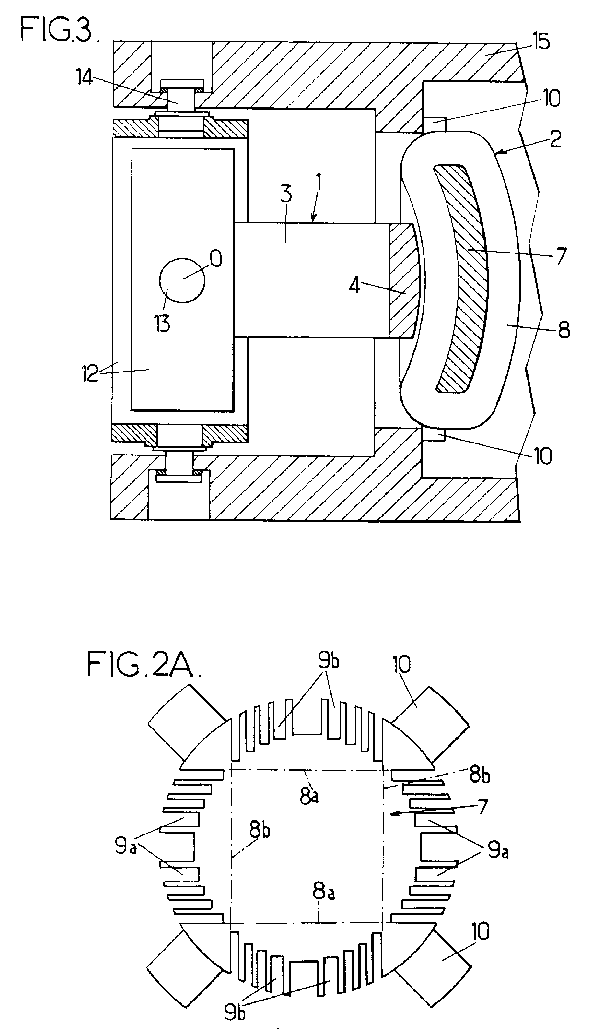

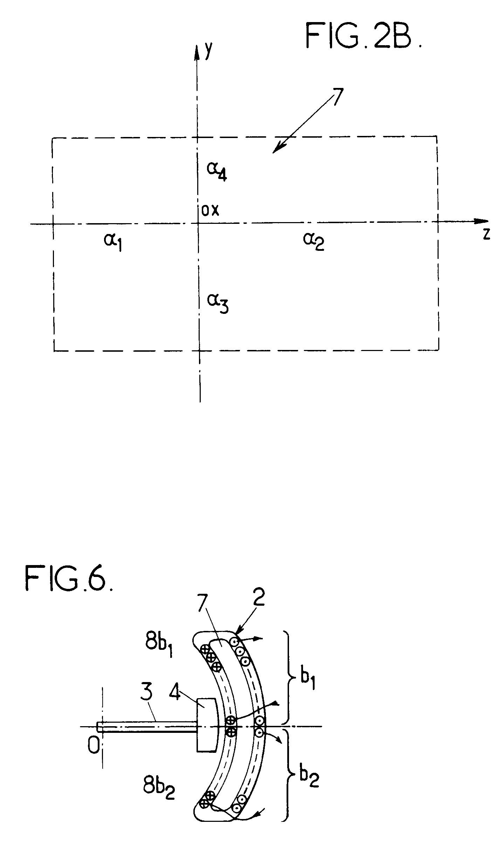

Les rotations du rotor sont limitées angulairement :
- soit en définissant un angle de dépointage maximum, l'enveloppe des positions du rotor étant alors un cône de sommet O et d'axe OX ; la pièce de retour de flux statorique 7 peut alors posséder un contour circulaire; la fig. 2A représente une telle pièce vue de face, sur laquelle sont visibles deux ensembles d'encoches, respectivement 9a et 9b, mutuellement décalées de 90° et destinées à recevoir les deux bobinages orthogonaux 8a et 8b (non représentés de façon détaillée et uniquement symbolisés par des traits mixtes) ; la pièce 7 est munie d'oreilles 10 saillant radialement pour sa fixation sur le carter du moteur ;
- soit en définissant des angles maximum de rotation autour de chacun des axes OY et OZ, angles maximum qui peuvent du reste être différents respectivement pour OY et OZ et être chacun différents de part et d'autre de l'axe OX ; l'enveloppe des positions du rotor est alors une pyramide de sommet O et de base carrée (angles égaux pour OY et OZ) ou rectangulaire (angles différents pour OY et OZ), symétrique (débattements identiques de part et d'autre de OX) ou asymétrique (débattements $\alpha_1$, $\alpha_2$, $\alpha_3$, $\alpha_4$ différents de part et d'autre de OX) ; la figure 2B représente le contour (en tirets) d'une pièce de retour de flux statorique réalisable dans un tel cas d'une enveloppe en forme de pyramide de base rectangulaire asymétrique ; l'agencement des encoches est identique à ce qui a été montré à la fig. 2A et n'est pas représenté à nouveau.

L'articulation à double rotation du bras 3 peut être agencée selon toute solution technique appropriée connue de l'homme de l'art. Les plus courantes sont la rotule sphérique et surtout l'articulation à cardan à deux axes qui est la plus simple quant à la réalisation.

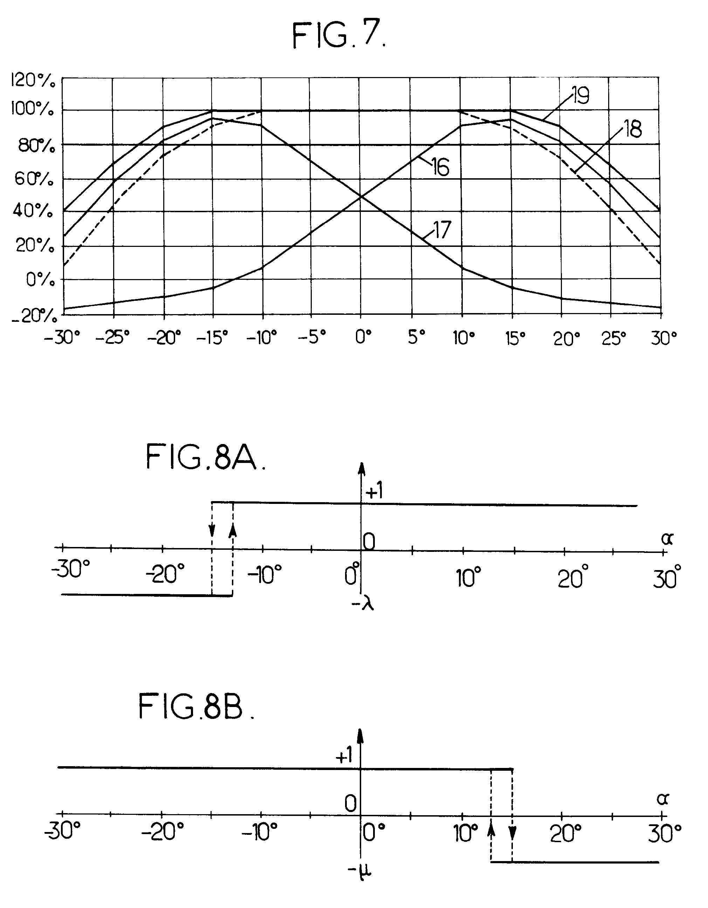

La figure 3 montre un exemple concret de réalisation d'un moteur agencé conformément à l'invention, avec une pièce de retour de flux statorique 7 conforme à celle de la fig. 2A et une articulation 12 du bras 3 du type cardan à deux axes orthogonaux respectivement 13 et 14 ; l'axe 14 du cardan et la pièce 7 sont supportés par un carter 15 enfermant le moteur.

Dans les agencements de moteur montrés aux figures 1 et 3, les faces mutuellement en regard du rotor et du stator sont en forme de calottes sphériques, respectivement convexe et concave, et sont sensiblement parallèles l'une à l'autre. On obtient un entrefer sensiblement constant et aussi faible que souhaité sur toute la plage de déplacement angulaire du rotor ; en outre le volume de l'aimant est plus important. Toutefois, on pourra tout aussi bien avoir recours à d'autres configurations du rotor et/ou du stator pour rechercher des effets particuliers, en fonction des applications spécifiques du moteur.

Sur les figures 4 et 5, on a représenté la configuration des lignes de flux magnétique (lignes d'équiflux) dans deux positions fonctionnelles du moteur, savoir en position pointée pour la figure 4 et en position dépointée'pour la figure 5.

On constate que la partie du bobinage qui est située du côté concave de la pièce de retour de flux statorique est "baignée" par le champ magnétique issu de l'aimant permanent du rotor, alors que la partie du bobinage située du côté convexe de la pièce de retour de flux ne voit pratiquement plus de champ magnétique, quelle que soit la position du rotor.

Il en résulte qu'en faisant passer un courant d'intensité $I_1$ dans l'un des bobinages (bobinage N° 1), on produit un couple moteur $K_1 I_1$ agissant sur le rotor suivant l'axe OY, et par un couplage d'axe on produit également un couple $\alpha_1 I_1$ agissant sur le rotor suivant l'axe OZ. De même lors de l'excitation de l'autre bobinage (bobinage N° 2).

Le couple total agissant sur le rotor est donc :
- suivant OY : CY = $K_1 I_1 + \alpha_2 I_2$
- suivant OZ : CZ = $K_2 I_2 + \alpha_1 I_1$

Les termes de couplage $\alpha_i I_i$ sont, en valeur absolue, plus faibles que les termes directs $K_i I_i$

$$(\alpha_i I_i \simeq \frac{K_i I_i}{10} \text{ avec } i = 1 \text{ ou } 2).$$

Les coefficients $K_1$ et $K_2$ sont appelés facteurs d'échelle du moteur. Ils dépendent essentiellement de la géométrie du système et de la position du rotor.

Quand les courants moteurs $I_1$ et $I_2$ sont nuls, il existe un couple résiduel $C_R$ qui agit sur le rotor. Ce couple $C_R$ est dû à la présence de la pièce de retour de flux statorique devant l'aimant. Physiquement, l'aimant de rotor tend à se positionner en face de la pièce de retour de flux statorique de manière à faciliter le passage du flux magnétique, c'est-à-dire de manière à minimiser l'énergie totale du système. Le couple résiduel $C_R$ dépend principalement de l'angle de dépointage $\alpha$ et est pratiquement perpendiculaire au plan de dépointage défini par l'axe du bras 3 du rotor et l'axe OX de référence. Il est possible de diminuer en partie l'influence de ce couple résiduel $C_R$ en disposant judicieusement sur le stator du moteur des pièces en matériau magnétique et des pièces en matériau aimantable.

Pour accroitre le couple moteur, en particulier pour un dépointage important du rotor, on peut prévoir que chaque bobinage 8$\underline{a}$ ; 8$\underline{b}$ soit constitué par deux demi bobinages respectivement 8$\underline{a}$1, 8$\underline{a}$2 et 8$\underline{b}$1, 8$\underline{b}$2 indépendants l'un de l'autre ; sur la fig. 6, seuls les demibobinages 8$\underline{b}$1 et 8$\underline{b}$2 sont visibles. On constitue ainsi deux demi-moteurs $a_1$, $a_2$ ; respectivement $b_1$, $b_2$ pour chaque axe de rotation.

L'intérêt de ce montage apparaît sur les résultats de l'étude magnétique représentés à la figure 7. Quand l'angle de dépointage du rotor atteint une valeur importante, on constate que les gains des demi-moteurs $a_1$, $a_2$ ou $b_1$, $b_2$ sont inversés. Si on commande un demi-moteur par un courant inverse de l'autre à partir d'une certaine valeur de l'angle de dépointage du rotor, on peut augmenter le facteur d'échelle total du moteur sur chaque axe de rotation.

Sur la figure 7 les courbes 16 et 17 représentent les variations des facteurs d'échelle respectifs des demi-moteurs $a_1$ (ou $b_1$) et $a_2$ (ou $b_2$) , respectivement (en ordonnées, en pourcents de la valeur maximale) en fonction de l'angle de dépointage du rotor (en abscisses). On constate que le facteur d'échelle obtenu pour chaque demi-moteur change de signe à partir d'une certaine valeur angulaire (voisine de ± 13° dans le cas considéré). Le facteur d'échelle global du moteur varie alors comme représenté par la courbe 18. Pour compenser la perte de couple entraînée par cet inversion du facteur d'échelle, il suffit donc, au-delà de ces valeurs, d'inverser le sens du courant du demi-moteur dont le facteur d'échelle a changé de signe (voir courbe 19). Le gain en couple est net à puissance égale.

Pour éviter un phénomène de "pompage" qui pourrait se produire quand le rotor oscille autour de la valeur angulaire d'inversion du courant, il est souhaitable de réaliser l'inversion de courant avec une hystérésis en fonction de l'angle de rotation du rotor, comme représenté respectivement sur la figure 8A pour le demi-moteur $a_1$ (ou $b_1$) et sur la figure 8B pour le demi-moteur $a_2$ (ou $b_2$).

Ainsi, la commande du demi-moteur $a_1$ (ou $b_1$) peut s'effectuer de la façon suivante :
- pour -13°<$\alpha$<30° : pas d'inversion (commande au niveau +1)
- pour -30°<$\alpha$<-15°: inversion du sens du courant (commande au niveau -$\lambda$, avec $\lambda$ > 0))
- pour -15°<$\alpha$<-13°: on conserve le même sens du courant (commande au niveau +1 ou -$\lambda$)

Si la position du rotor oscille autour de -13°, la commande restera à +1 ; si elle oscille autour de -15°, la commande restera à -$\lambda$. Le saut de gain qui aura lieu au moment de l'inversion du courant restera faible devant le facteur d'échelle total du moteur complet. La commande du demi-moteur B s'effectuera de la même manière comme suit :
- pour -30°<$\alpha$<13° : pas d'inversion (commande au niveau +1)
- pour 15°<$\alpha$<30° : inversion du sens du courant (commande au niveau -$\mu$, avec $\mu$ > 0)
- pour 13°<$\alpha$<15° : on conserve le même sens du courant (commande au niveau +1 ou - $\mu$)

Typiquement, on pourra avoir : $\lambda$ = $\mu$ = 1 par exemple.

## Revendications

1. Moteur électrique à courant continu comportant

- un rotor à aimant permanent (1), mobile en rotation autour d'un centre de rotation (0) avec deux degrés de liberté et avec une plage de débattement angulaire (α) prédéterminée inférieure à 180°, et
- un stator (2) avec une pièce de retour de flux statorique et des bobinages croisés indépendants disposés en correspondance avec les deux degrés de liberté du rotor et s'étendant sur des étendues angulaires respectives en correspondance avec la susdite plage de débattement angulaire du rotor,

caractérisé en ce que

- l'aimant permanent du rotor est unique et à polarisation dirigée radialement,
- la pièce de retour de flux statorique (7) est unique et centrée sur la position de repos du rotor, et
- les bobinages croisés (8) du stator sont au nombre de deux formant une paire unique et sont enroulés en direction radiale autour de ladite pièce de retour de flux statorique (7).

2. Moteur électrique selon la revendication 1, caractérisé en ce qu'une pièce de retour de flux rotorique (6) est associée à l'aimant (4) du rotor, à l'opposé du stator.

3. Moteur électrique selon la revendication 1 ou 2, caractérisé en ce que le rotor comprend un bras (3) supporté de manière à pouvoir tourner autour dudit centre de rotation (O), selon les deux degrés de liberté susindiqués, et supportant à une extrémité libre le susdit aimant permanent (4).

4. Moteur électrique selon l'une quelconque des revendications 1 à 3, caractérisé en ce que les faces en regard du rotor et du stator sont en forme de calotte sphérique respectivement convexe et concave et sont sensiblement parallèles l'une à l'autre.

5. Moteur électrique selon l'une quelconque des revendications 1 à 4, caractérisé en ce qu'il est prévu des plages (α₁, α₂ ; α₃, α₄) de débattement angulaire du rotor (2) par rapport à chacun des deux axes de rotation (OY, OZ) et en ce que la pièce de retour de flux statorique (7) possède alors un contour rectangulaire ou carré.

6. Moteur électrique selon l'une quelconque des revendications 1 à 4, caractérisé en ce qu'il est prévu une plage de débattement angulaire du rotor par rapport au centre de rotation et en ce que la pièce de retour de flux statorique (7) possède alors un contour circulaire.

7. Moteur électrique selon l'une quelconque des revendications 1 à 6, caractérisé en ce que le centre de rotation (O) est déterminé par une articulation sphérique.

8. Moteur électrique selon l'une quelconque des revendications 1 à 6, caractérisé en ce que les deux axes de rotation (OY, OZ) sont orthogonaux, en ce que les deux bobinages (8) du stator sont mutuellement perpendiculaires et en ce que le centre de rotation (O) est déterminé par une articulation sphérique ou une articulation à cardan (12) à deux axes orthogonaux (13, 14).

9. Moteur électrique selon l'une quelconque des revendications 1 à 8, caractérisé en ce que au moins un des bobinages (8) est constitué sous forme de deux demibobinages indépendants (8a, 8b) s'étendant respectivement de part et d'autre de la position de repos (OX) et excitables de façon indépendante.

**Claims**

1. A DC electric motor comprising
   - a permanent-magnet rotor (1) movable in rotation about a centre of rotation (0) with two degrees of freedom and with a predetermined angular deflection range (α) less than 180°, and
   - a stator (2) with a stator flux return piece and independent crossed windings disposed to correspond with the two degrees of freedom of the rotor and extending over respective angular extents corresponding with the said angular deflection range of the rotor,

   characterised in that
   - the rotor permanent-magnet is single and of radially directed polarisation,
   - the stator flux return piece (7) is single and centred on the position of rest of the rotor, and
   - the crossed windings (8) of the stator are two in number forming a single pair and are wound in a radial direction around the said stator flux return piece (7).

2. An electric motor according to claim 1, characterised in that a rotor flux return piece (6) is associated with the rotor magnet (4), remote from the stator.

3. An electric motor according to claim 1 or 2, characterised in that the rotor comprises an arm (3) so supported as to be rotatable about the said centre of rotation (0) in accordance with the above two degrees of freedom, and supporting the said permanent magnet (4) at one free end.

4. An electric motor according to any one of claims 1 to 3, characterised in that the facing surfaces of the rotor and of the stator are in the form of respectively convex and concave spherical portions and are substantially parallel to one another.

5. An electric motor according to any one of claims 1 to 4, characterised in that angular deflection ranges ($\alpha_1$, $\alpha_2$; $\alpha_3$, $\alpha_4$) of the rotor (2) are provided with respect to each of the two axes of rotation (OY, OZ) and in that the stator flux return piece (7) then has a rectangular or square contour.

6. An electric motor according to any one of claims 1 to 4, characterised in that an angular deflection range of the rotor is provided with respect to the centre of rotation and in that the stator flux return piece (7) then has a circular contour.

7. An electric motor according to any one of claims 1 to 6, characterised in that the centre of rotation (0) is determined by a spherical articulation.

8. An electric motor according to any one of claims 1 to 6, characterised in that the two axes of rotation (OY, OZ) are orthogonal, in that the two windings (8) of the stator are mutually perpendicular and in that the centre of rotation (0) is determined by a spherical articulation or a cardan articulation (12) having two orthogonal axes (13, 14).

9. An electric motor according to any one of claims 1 to 8, characterised in that at least one of the windings (8) is in the form of two independent half-windings (8a, 8b) respectively extending on either side of the position of rest (OX) and independently energisable.

**Patentansprüche**

1. Elektrischer Gleichstrommotor mit einem Rotor mit Permanentmagnet (1), welcher drehbeweglich um ein Rotationszentrum (0) mit zwei Freiheitsgraden und mit einem vorbestimmten winkelförmigen Auslenkungsbereich ($\alpha$) unterhalb 180° ist, und mit einem Stator (2) mit einem Umkehrstück für den Statorfluß mit unabhängigen, gekreuzten Spulen, die in Übereinstimmung mit den Freiheitsgraden des Rotors angeordnet sind und sich auf den entsprechenden winkelförmigen Auslenkungsbereich des Rotors erstrecken, dadurch gekennzeichnet, daß der Permanentmagnet des Rotors einzig und mit einer radial gerichteten Polarisation ist, daß das Umkehrstück für den Statorfluß (7) einzig ist und auf die Ruheposition des Rotors zentriert ist und daß die gekreuzten Spulen (8) des Stators zweifach sind und ein einziges Paar bilden und in radialer Richtung um das Umkehrstück des Statorflusses (7) gewickelt sind.

2. Elektromotor nach Anspruch 1, dadurch gekennzeichnet, daß ein Umkehrstiick des Rotorflusses (6) mit dem Magneten (4) des Rotors gegenüberliegend zum Stator verbunden ist.

3. Elektromotor nach Anspruch 1 oder 2, dadurch gekennzeichnet, daß der Rotor einen Arm (3) aufweist, der derart getragen ist, daß er sich um das Rotationszentrum (0) drehen kann, und zwar gemäß den zwei vorbeschriebenen Freiheitsgraden und mit seinem freien Ende den Permanentmagneten (4) trägt.

4. Elektromotor nach irgendeinem der Ansprüche 1 bis 3, dadurch gekennzeichnet, daß die gegenüberliegenden Flächen des Rotors und des Stators die Form einer sphärischen Kalotte jeweils konvex und konkav aufweisen und etwa parallel zueinander sind.

5. Elektromotor nach irgendeinem der Ansprüche 1 bis 4, dadurch gekennzeichnet, daß er mit winkelförmigen Auslenkungsbereichen ($\alpha_1$, $\alpha_2$, $\alpha_3$, $\alpha_4$), des Rotors (2) im Verhältnis zu jeder der zwei Rotationsachsen (OY, OZ) versehen ist und daß das Umkehrstück des Statorflusses (7) dann eine rechtwinklige oder quadratische Form aufweist.

6. Elektromotor nach irgendeinem der Ansprüche 1 bis 4, dadurch gekennzeichnet, daß er mit einem winkelförmigen Auslenkungsbereich des Rotors im Verhältnis zum Rotationszentrum versehen ist und daß das Umkehrstück des Statorflusses (7) dann eine ringförmige Kontur aufweist.

7. Elektromotor nach irgendeinem der Ansprüche 1 bis 6, dadurch gekennzeichnet, daß das Rotationszentrum (0) durch eine sphärische Anlenkung bestimmt ist.

8. Elektromotor nach irgendeinem der Ansprüche 1 bis 6,

dadurch gekennzeichnet,
daß die zwei Rotationsachsen (OY, OZ) rechtwinklig sind, daß die beiden Spulen (8) des Stators gegenseitig rechtwinklig sind und daß das Rotationszentrum (0) durch eine sphärische Anlenkung oder eine kardanische Anlenkung (12) mit zwei rechtwinkligen Achsen (13,14) bestimmt ist.

9. Elektromotor nach irgendeinem der Ansprüche 1 bis 8,
dadurch gekennzeichnet,
daß wenigstens eine der Spulen (8) von zwei unabhängigen Halbspulen (8a,8b) gebildet ist, die sich jeweils zu beiden Seiten der Ruheposition (OX) erstrecken und unabhängig erregbar sind.

FIG.1.

FIG.4.

FIG.5.

## FIG.3.

## FIG.2A.

FIG.2B.

FIG.6.

# FIG.7.

# FIG.8A.

# FIG.8B.